## Europäisches Patentamt

## European Patent Office

## Office européen des brevets

(11) Publication number: **0 119 199**
**B1**

(12) **EUROPEAN PATENT SPECIFICATION**

(45) Date of publication of patent specification: **28.02.90**

(21) Application number: **82903614.4**

(22) Date of filing: **27.10.82**

(86) International application number:
**PCT/US82/01523**

(87) International publication number:
**WO 84/01253 29.03.84 Gazette 84/09**

(60) Divisional application **88117506.1 filed on 27/10/82.**

(51) Int. Cl.⁵: **H 04 N 5/93**

(54) **METHOD AND APPARATUS FOR PRODUCING AN ARTIFICIAL VERTICAL SYNCHRONIZING SIGNAL FOR VIDEO TAPE RECORDING.**

(30) Priority: **17.09.82 PCt/us82/01281**

(43) Date of publication of application:
**26.09.84 Bulletin 84/39**

(45) Publication of the grant of the patent:
**28.02.90 Bulletin 90/09**

(84) Designated Contracting States:
**AT BE CH DE FR GB LI LU NL SE**

(56) References cited:
**DE-A-1 412 303  US-A-3 573 359**
**DE-A-1 412 410  US-A-3 627 913**
**DE-A-1 762 475  US-A-3 767 849**
**DE-B-1 202 316  US-A-4 086 520**
**GB-A-2 071 879  US-A-4 238 770**
**US-A-3 322 892  US-A-4 257 073**
**US-A-3 407 266  US-A-4 259 698**
**PATENTS ABSTRACTS OF JAPAN, vol. 5, no. 113 (E-66)785r, 22nd July 1981; & JP-A-56 52 977 (SONY K.K.) 12-05-1981**
**PATENTS ABSTRACTS OF JAPAN, vol. 5, no. 63 (E-54)735r, 28th April 1981; & JP-A-56 13 882 (TOKYO SHIBAURA DENKI K.K.) 10-02-1981**

(73) Proprietor: **AMPEX CORPORATION**
**401 Broadway M.S. 3-35**
**Redwood City California 94063-3199 (US)**

(72) Inventor: **RAVIZZA, Raymond, F.**
**19681 Drake Drive**
**Cupertino, CA 95014 (US)**
Inventor: **RODAL, David, R.**
**3363 Kenneth Drive**
**Palo Alto, CA 94303 (US)**

(74) Representative: **Horton, Andrew Robert Grant et al**
**BOWLES HORTON Felden House Dower Mews High Street**
**Berkhamsted Hertfordshire HP4 2BL (GB)**

(56) References cited:
**PATENTS ABSTRACTS OF JAPAN, vol. 6, no. 77 (E-106)955r, 14th May 1982; & JP-A-57 14 258 (MITSUBISHI DENKI K.K.) 25-01-1982**

# Description

This invention generally relates to rotary head video tape recording and reproducing apparatus. More particularly, it relates to an apparatus and method for reducing objectionable signal timing errors caused by errors in the angular position of a rotating record/reproduce head, specially, static timing errors in the presence of dynamic timing errors.

Rotary head tape recording and reproducing apparatus transfer information to and from a tape longitudinally transported between supply and take-up reels while one or more heads scan across the tape along parallel paths inclined at an angle to the length of the longitudinally transported tape. The stability of recording information on or reproducing information from the tape is dependent upon the rotational stability of the rotating head (or heads) and the longitudinal transport stability of the transported tape. To maintain the required stability, such apparatus traditionally includes a rotary head servo system and a tape transport servo system. The rotary head servo system and the tape transport servo system cooperate to keep the rotary head accurately positioned relative to the tape, with the rotary head servo system functioning to control the rotational speed and position of the rotary head while the tape transport servo system functions to control the longitudinal transport speed and position of the tape relative to the plane of rotation of the rotary head.

Typically, the rotary head servo system exercises control over the rotary head by comparing a tachometer signal representative of the actual rotational speed and position of the rotary head with a reference signal indicative of the desired rotational speed and position. During normal recording operations, the reference signal is supplied by an external reference timing source, usually, a station or house sync signal. During other operations, such as normal reproducing operations or insert recording or edit operations (during which new information is recorded on the tape synchronously with previously recorded information), however, a feedback control system operatively associated with the rotary head provides the reference signal to the rotary head servo system, the provided reference signal being synchronous with the information signal reproduced by the rotary head. Such reference signal is often derived from a timing component signal included in the reproduced information signal. If the rotary head is mispositioned, the compared tachometer signal and feedback reference signal will be out of phase. The rotary head servo system responds to the out of phase condition by adjusting the rotational position of the rotary head until a correct phase relationship between the compared signals is obtained. During an insert record or edit operation, the foregoing rotary head position correction is performed during the reproduction from the tape of previously recorded information prior to the recording of the new information on the tape so that the rotary head is positioned relative to the tape to record the new information synchronously with information previously recorded on the tape. When the correct rotary head position is obtained and the tape is properly positioned relative to the plane of the rotary head where the new information is to be recorded, the feedback reference signal, hence, the rotary head servo system, is locked to the last known correct rotational position of the rotary head for the duration of the insert recording or edit operation to maintain such position for the duration of the operation.

The tape transport servo system controls the longitudinal transport of the tape by comparing a tachometer signal representative of the actual longitudinal transport speed and position of the tape with a reference signal indicative of the desired longitudinal transport speed and position. During normal recording operations, the position of the longitudinally transported tape relative to the plane of rotation of the rotary head is typically controlled without benefit of information representative of the actual position of the longitudinally transported tape relative to the plane of head rotation by phase locking the tape transport servo system to a reference signal indicative of the desired speed and position of the transported tape. Such control is satisfactory for most operations performed by the rotary head tape recording and reproducing apparatus because the longitudinal tape to rotational head position is defined well enough to permit accurate reproduction of the recorded information. As will be discussed further hereinafter, however, the position of the longitudinally transported tape is accurately controlled in accordance with detected actual tape position information during normal reproducing operations or insert recording or edit operations.

During normal recording operations, the reference signal provided to the tape transport servo is obtained from the aforementioned external reference timing source. During normal reproducing and insert recording (or edit) operations, a feedback system operatively associated with the longitudinally transported tape provides the reference signal the provided reference signal being synchronous with the transport of the tape. Commonly, such reference signal is derived from a control track signal longitudinally recorded along the tape at the same time the information is recorded by the rotary head along the parallel paths on the tape to identify the locations of the parallel paths in which information is recorded by the rotary head. If the transported tape is not properly positioned relative to the plane of rotation of the rotary head, the control track signal reproduced from the tape will produce a corresponding phase error condition in the tape transport servo system. The tape transport servo system responds to the phase error condition to adjust the transport of the tape until the phase error condition is eliminated. The tape transport servo system also operates in this manner to position the transported tape properly relative to the rotational plane of the rotary head during the reproduction of information from the tape prior to the recording of new information on the tape during an inserted record or edit operation. When the transported tape is thusly positioned properly relative to the plane of rotation of the rotary head, the tape transport servo system is locked to the last known correct tape position for the duration of the insert recording or edit operation to maintain such position for the duration of the operation.

It will be appreciated from the foregoing that the stability of reproducing information from the tape or recording new information on the tape synchronously with previous recorded information depends upon obtaining and maintaining the relative rotational stability of the rotary head and longitudinal transport stability of the tape. Present rotary head servo systems and tape transport servo systems are able to achieve such stability conditions as long as dynamic timing errors are not encountered at the same time as static timing errors caused, for example, by tape interchange, environmental, tape guide change and the like conditions.

In helical type rotary head tape magnetic recording and/or reproducing apparatus, magnetic tape is transported about a cylindrical tape guide drum along a helical path as one or more magnetic transducers or heads are rotated to scan the tape. When a single head is used, the tape usually is wrapped around the drum in a configuration which resembles the Greek letter omega (Ω) when viewed from above. Scanning of the tape is only interrupted in a drop-out zone located between entrance and exit guides that direct the tape into and out of the helical path about the tape guide drum.

The video information is applied to the record head, which records the information along the tape on discrete parallel tracks that are inclined at an acute angle relative to the longitudinal direction of the tape. However, no information is recorded on the tracks by that head while it rotates through the drop-out zone between the entrance and exit guides, during which time the record head is not in a recording relationship with the tape. Normally, the speed and rotational phase position of the rotary head are synchronized when recording so that the head enters the drop-out area shortly after the beginning the vertical blanking interval separating active video information portions of two television fields, and preferably always after a particular pulse during the vertical sync period of the vertical blanking interval, such as the second vertical broad pulse. After the drop-out interval, which ends within several lines of the field following the vertical sync period, the head is again positioned in a recording sync period, the head is again positioned in a recording relationship with the tape. Since the lines forming the vertical blanking interval do not contain active video information, virtually none of the active video information is lost due to the rotational drop-out.

In helical rotary head tape recording and reproducing apparatus designed to record and reproduce video information according to the Type C Format standard, a stationary control track head is located along the tape path about three inches from the tape exit guide, on the control tract head and take-up reel side of the tape guide drum. Usually, the tape is transported under the control of a capsan located along the tape path at the opposite side of the tape guide drum. The control track head scans a longitudinal control track signal recorded along one edge of the tape. During video recording operations, a control track signal is recorded on the control track, which is typically a video frame, or 1/2 field rate signal in the form of a 30 Hz square wave synchronized to the occurrence of the vertical sync signal of the video information simultaneously recorded on the tape. The control track signal is normally recorded so that its transitions are offset in position along the tape relative to the recorded vertical sync signal location by a distance corresponding to the length of the tape separating the control track head and the rotary head at the time the vertical sync signal is recorded.

In such apparatus, the rotation of the rotary head is controlled so that it passes through the drop-out zone during the occurrence of a middle part of the vertical blanking interval, the blanking interval spanning approximately 20 horizontal lines of the 262-1/2 lines constituting each television field interval (525 line format). A particular component forming the vertical blanking interval that is reliably recorded and reproduced during all operations is selected to control the rotary head servo. A convenient component selected for recording and reproducing apparatus capable of reproducing special motion effects, such as described in the Ravizza United States Patent 4,163,993, is the second pre-equalizing pulse of the vertical blanking interval, which is generally always recorded and reproduced during normal and special effects modes of operation of the apparatus. The second pre-equalizing pulse is recorded at a physical location near the tape entrance guide when information is recorded and reproduced from the tape and is recorded by the rotary head just before the head enters the drop-out zone at the entrance guide and, therefore, is generally located about three inches plus the distance around the tape guide drum from the stationary control track head.

It should be appreciated that the location of the second pre-equalizing pulse relative to the position of the control track head represents a substantial distance in terms of the length of tape. In apparatus designed to record and reproduce video information according to the aforementioned Type C Format standard, it may approximate twenty inches, since it is separated from the control track head by the length of tape that is wrapped around the tape guide drum. It should also be apparent that if a vertical sync pulse is recorded near the tape exit guide, the length of tape representing the amount of tape wrapped around the scanning drum would be eliminated and the distance between the control track head and a vertical synchronizing location on the tape immediately after the occurrence of the drop-out interval would be approximately only three inches.

It is well known that there is a significant timing relationship between the recorded control track signal location and the location of the vertical sync signal and that the quality of the reproduction of the recorded information can be detrimentally affected when this timing relationship between the two signals varies, such as occurs when the tape length expands or shrinks due to changes in the environmental conditions. This relationship is also altered by interchange errors, i.e., changes in the relationship between the recorded control track signal and the vertical sync signal caused by different head-to-tape track determining geometries of different recording and reproducing apparatus. Other factors that can alter the relationship between the recorded control track signal and the vertical sync signal are changes in the tape guide parameters determining the head-to-tape track relationship of a particular recording and reproducing apparatus after the signals have been recorded. Such variations can introduce particularly undesirable mistiming during editing operations when it is desired to record or insert new information on a tape synchronously with other video information previously recorded on the tape.

A time base corrector (TBC) is virtually always used with a broadcast quality rotary head video tape recording and reproducing apparatus to correct timing errors that occur in the reproduced video information signal and such time base correctors can effectively correct timing errors that change on a line-by-line basis. However, they have limited capability to correct large incremental timing errors. Such large errors commonly occur during an insert edit recording operation because of the aforementioned variation in the head-to-tape track relationships from apparatus to apparatus. Even advanced time base correctors that are capable of making corrections up to a full television field interval are generally incapable of correcting instantaneous timing discontinuities that exceed about 30 microseconds, which represents approximately one-half of a horizontal line of video information. When a timing discontinuity exists that is greater than one-half horizontal line, a disruption may occur in the television signal timing that appears as a breakup in the display of the reproduced television signal, typically at the time of the reproduction of the recorded vertical sync signal.

The rotary head servo system responds to the mistiming of the vertical sync signal by adjusting the position of the rotary head to eliminate the timing error determined from the reproduced vertical sync signal. By virtue of the static character of some timing errors, such as result from changes in the tape tension, however, the timing error progressively varies in a linear fashion during the following television field interval until the next vertical sync signal time, at which time a new determination and correction of static tape tension related errors occur. Unfortunately, the existance of dynamic tape tension related errors, or other dynamic disturbing influences on the relative timing of the reproduced control track signal and vertical sync signal, do not permit satisfactory determination of the actual static tape tension error by the aforedescribed technique for some purposes, particularly, where the precise determination of such static error is desirable. For example, the synchronous recording of new video information with previously recorded video information during edit insert operations requires such precise determinination in order to avoid undesirable timing discontinuities at the edit point. The magnitude of the timing discontinuity can grow over a series of edits as a result of the presence of the dynamic disturbing influences, which eventually may lead to a timing discontinuity exceeding the correction capability of the time base corrector associated with the recording and reproducing apparatus. Any application of the reproduced vertical sync signal requiring a precise determination of its timing relative to that of the recorded control track signal requires a precise determination of the static timing error between these signals.

The foregoing can better be appreciated by consideration of the nature of the variation of the tape tension related error over the interval of a television field, the effect of the use of the recorded vertical sync signal in measuring the tape tension error at the conclusion of the scan of the tape by the rotary head and the effect on this measurement of the presence of dynamic disturbing influences on the relative timing between the reproduced control track signal and video sync signal. At the beginning of each scan of a track along the tape by the servoed rotary head, which occurs after the measurement of the timing error at the end of the previous scan of the tape, the amount of error due to the dynamic disturbing influences is small. However, the progressive nature of some dynamic errors, particularly, those associated with tape tension variations, results in a large dynamic error at the end of that scan of the tape, which is at the time the next measurement of static timing error is made. As will be appreciated, the dynamic character of the error resulting from the dynamic disturbing influences on the timing of the reproduced vertical sync signal makes precise determination of the static timing error difficult, if not virtually impossible, to obtain. The inability to determine the static tape tension error precisely renders it virtually impossible to effect an insert edit recording of new video information synchronously with the previously recorded video information or precise timing control of any other aspect of the system operation where the relative timing between the rotation head and longitudinally transported tape is relevant.

As can be seen from the foregoing, it is important that insert edits be accomplished without the introduction of timing variations that exceed the limits of performance of available time base correctors used with rotary head video tape recording and reproducing machines. During an insert edit operation, this requires knowledge of the timing of the information previously recorded on the tape prior to the start of the edit so that the rotational phase of the rotary head that is to record the new information can be set close to the timing of the previously recorded information. As discussed previously, this enables the new information to be synchronously recorded with the previously recorded information.

As described hereinbefore, the tape is typically transported under the control of a capstan during recording and reproducing operations and the capstan servo is controlled by the control track signals during reproducing operations. The rotating head is controlled by the rotary head servo, which in turn is controlled by the vertical synchronizing signal during reproducing operations. The servos exercise control over the transport of the tape and the rotation of the head, respectively, relative to a common reference signal, usually provided by a reference timing signal source, such as studio sync or the like. As a tape is transported during reproduction operations, the recorded control track signal is reproduced to control the movement of the tape and the recorded vertical sync signal is extracted from the reproduced video information to control the relative phase or angular position of the rotating head at the same time. It should be apparent that if the location of the recorded vertical sync signal and the recorded control track signal are relatively close to one another, any static or dynamic timing errors, for example, growing out of tape tension or like variations between the time of the recording of the information and its reproduction would have less effect on the relative servo control operations than if the locations are farther apart. If an insert edit is to be made and the tape is being controlled in the reproducing mode as it approaches the edit point where new information is to be recorded or inserted synchronously with information previously recorded on the tape, timing or phase discontinuities at the transition between the newly and previously recorded information will be minimized, if the timing of the reproduced control track signal is virtually identical to that when recorded and the timing of the reproduced and extracted vertical sync signal is also virtually identical to that when recorded.

If temperature or humidity conditions, tracking geometries, tape guide parameters, tape tension or the like are different at the time new information is recorded relative to the time during which the previous information was recorded, variations in the relative locations and, therefore, the timing relationship between the control track signal and vertical sync signal results. The magnitude of the variation will be in direct proportion to the length of tape between the physical locations of the reproduction of the vertical sync and control track signals, e.g., a greater variation results if the difference is twenty inches rather than three inches.

Accordingly, it is a primary object of the present invention to provide an improved method and apparatus for minimizing the effects of signal timing variations between the occurrences of the control track signal and the vertical sync signal in a helical rotary head video tape recording and reproducing apparatus.

Another object of the present invention is to provide an improved method and apparatus which accomplishes the foregoing object by generating an artificial vertical sync signal from signal information that is reproduced from the tape at a location along the tape path close to location of the control track head.

A more detailed object of the present invention is to provide an improved method and apparatus for generating an artificial vertical sync signal utilizing the second pre-equalizing pulse of the vertical blanking interval of a television signal for keying a circuit which defines a timing window during which a selected horizontal sync signal is reproduced, which horizontal sync signal is reproduced from the tape at a location closely adjacent to the control track head and which defines the artificial vertical sync signal for use in a rotary head servo system.

Other objects and advantages of the present invention will become more apparent upon consideration of the following description of a preferred embodiment of the present invention and following claims in connection with the accompanying drawings, in which:

Fig. 1 is a greatly simplified top view of a portion of a helical rotary head video tape recording and reproducing machine, particularly illustrating the relationship of the rotary head, tape guide arrangement and control track head;

Fig. 2 illustrates various timing diagrams showing the relationship between the vertical blanking interval, the drop-out interval and the timing window used in the generation of the artificial vertical sync signal in accordance with the present invention;

Fig. 3 is a block diagram of the artificial vertical sync signal generator circuitry of the preferred embodiment of the present invention;

Fig. 4 is a block diagram of the preferred embodiment of the rotary head servo system of the present invention; and

Fig. 5 illustrates a schematic diagram of detailed electrical circuitry that carries out the operation of the block diagram of Fig. 3.

Detailed description of the preferred embodiments

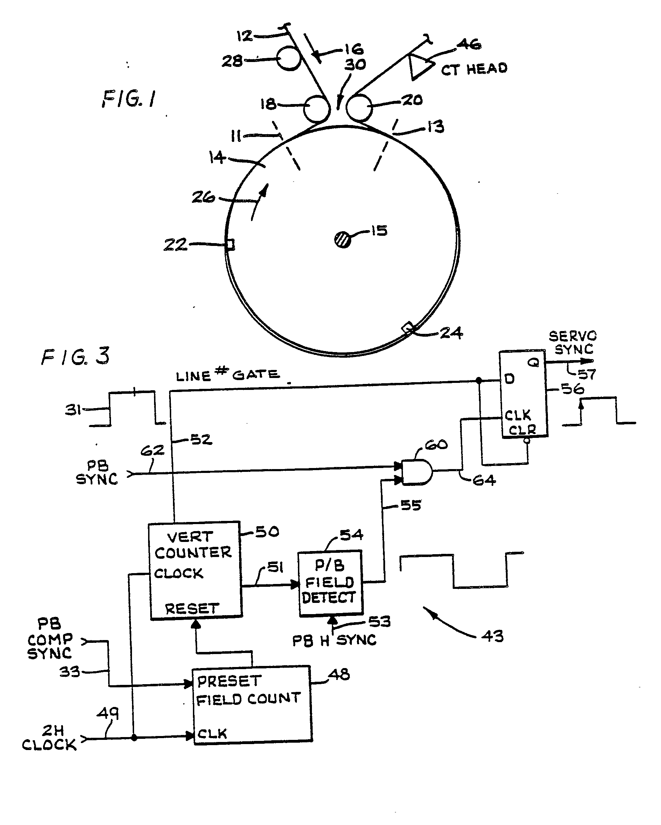

Turning now to the drawings and particularly Fig. 1, a portion of a helical rotary head magnetic video tape recording and reproducing apparatus is shown as transporting a magnetic recording tape 12 about a cylindrical tape guide drum 14 in a direction shown by the arrow 16. The tape 12 is guided by a tape entrance guide 18 to enter the helical path about the drum 14, is passed helically around the drum 14 and is guided by a tape exit guide 20 to leave the drum 14.

As the tape 12 travels around the drum 14, a first head 22 and a second head 24 are rotated in a direction shown by arrow 26 in transducing relation with the tape 12. In the preferred embodiment of the present invention, the tape guide drum 14 consists of two axially displaced coaxial sections, one of which is mounted to a rotatable shaft 15 for rotation about the shaft's axis in the direction of arrow 26 and carries the heads 22 and 24 for rotation therewith. The head 22 is preferably used primarily for recording video information, but may be used to reproduce recorded information, if desired, such as during the reproduction of recorded video information prior to recording of new information on the tape when edits are performed. The head 24 is a dedicated video reproduce head, and is angularly displaced about 120° relative to the head 22 in a direction opposite to the direction of rotation of the heads.

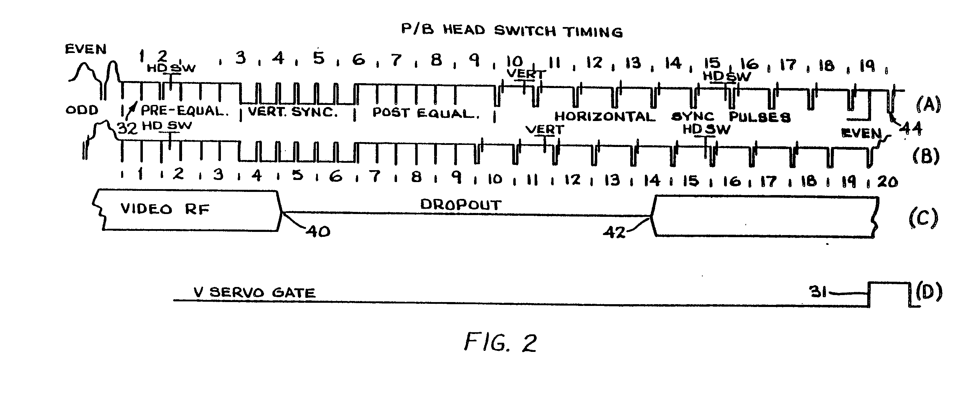

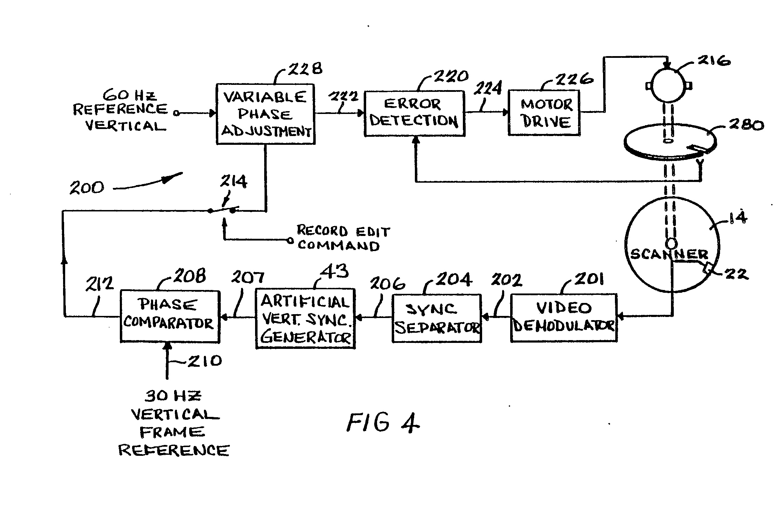

The area between the entrance and exit guides 18 and 20 defines a drop-out zone 30 wherein the rotating transducing head is out of transducing relation with the magnetic tape 12. The apparatus has a rotary head servo mechanism for controlling the rotational velocity and angular phase or position of the rotating heads so as to be synchronized to the occurrence of the vertical sync signal extracted from the reproduced video information. As previously mentioned, the apparatus records a video information signal so that a substantial portion of the vertical blanking interval occurs during the time the reproduce head passes through the drop-out zone 30. An artificial vertical sync signal, which can be used to control the rotary head servo and which is less susceptible to timing variations between the occurrences of the control track signal and the vertical sync signal is generated in the following manner. Circuitry detects a component of the vertical blanking interval, such as the second pre-equalizing pulse, generally reproduced from a location 11 on the tape 12 adjacent the tape entrance guide 18 when, for example, the head 22 is at the corresponding location in its rotation about the axis of the shaft 15. The second pre-equalizing pulse is reproduced from the tape 12 on the side of the drop-out zone 30 that is opposite the side having the control track head 46. A counting means triggered by the reproduced second pre-equalizing pulse provides a timing window signal 31 (Figs. 2(D) and 3) after a predetermined time, which corresponds to the time required for the head 22 to rotate from the location 11 to a location that is on the opposite side of the drop-out zone 30 adjacent the exit guide 20. A predetermined horizontal synchronizing pulse within the window 31 is then detected and defined as the artificial vertical sync signal that is used by the rotary head servo to control the speed and phase of the rotating heads.

Returning to Fig. 1, the speed and phase of the transport of the tape 12 are controlled by a capstan drive means 28 or the like, and the speed and phase of the rotating section of the drum 14, hence, heads 22 and 24 are controlled by a rotary head servo, a preferred embodiment of which illustrated in Fig. 4. While the tape 12 is transported at about 10 inches per second, the rotary heads rotate at a rate of 50 revolutions per second in 50 Hz line standard recording and reproducing apparatus or 60 revolutions per second in 60 Hz line standard apparatus.

In the record mode, the head 22 records video information on the tape 12 along discrete parallel tracks that are inclined at an angle relative to the longitudinal direction of the tape. Each field of video information includes a vertical blanking interval containing vertical synchronizing information, as shown in Figs. 2(A) and 2(B). The interval occurs between successive television fields, and includes a series of pre-equalizing pulses, vertical sync pulses, sometimes referred to as broad pulses, post-equalizing pulses and horizontal sync pulses, as shown. The vertical blanking interval occupies an interval corresponding to about twenty horizontal lines of video information.

Each television frame is composed of two interlaced consecutive fields, designated the "even" field, partially shown in Fig. 2(A) with line numbers, and the "odd" field, shown partially in Fig. 2(B) with line numbers. The speed and angular position or phase of the drum 14 carrying the rotary heads 22 and 24 is controlled by the rotary head servo synchronized to the occurrence of vertical sync recorded on the tape 12. The rotary head servo controls the rotational speed and phase of the rotary heads (Fig. 1) so that the head 22 (which will be the head considered to be selected for reproducing video information in the description of the preferred embodiment of the present invention) enters the drop-out zone 30 shortly after reproducing a particular pulse contained in the vertical blanking interval recorded on the tape 12. In the preferred embodiment of the present invention, the second pre-equalizing pulse, approximately at a point 1 in Fig. 2(A) is reproduced before the head 22 enters the drop-out zone 30 and is the last part of the information in the vertical interval that is reproduced.

The relationship between the occurrence of the vertical blanking interval and the occurrence of the drop-out is shown by comparing Fig. 2(A) and Fig. 2(C). The drop-out in the reproduced video information begins at the point 40, after the broad pulse 35, and ends at the point 42, which is before the last horizontal line 44 in the vertical blanking interval.

As shown in Fig. 1, a control track head 46 is fixed in transducing relation to the tape 12 along the tape at a location which is about three inches from the tape exit guide 20. The control track head 46 preferably records a frame, or 1/2× field, rate square wave control track signal along one edge of the tape 12 during recording operations, and reproduces the recorded control track signal during playback operations for use in servo controlling the transport of the tape 12.

The method and apparatus of the present invention overcomes the adverse effects of dynamic and static timing errors that may result from changes in humidity, temperature, tape tension and other tape instability inducing factors which effectively alter the timing relationship between the control track and the vertical sync signals. This is accomplished in accordance with the present invention by the use of an artificial vertical sync signal that is derived from the active video information signal at a location along the tape path that is physically much closer to the control track head than along the tape path at which the vertical sync signal is reproduced. As shown in Fig. 1, utilizing a signal that is reproduced from a location approximately at point 13 in the tape path, rather than at point 11, virtually eliminates the entire length of tape that spans the circumference of the tape guide drum 14 from the separation of the control track head 46 and the artificial vertical sync reproduction location 13, the remaining separation distance being relatively small. Consequently, the timing relationship between the control track signal and the artificial vertical sync signal is not appreciably affected by the tape instabilities that may be caused by variations in temperature, humidity, tape tension, tracking geometry and the like.

Vertical sync information extracted from the reproduced video information is commonly employed to maintain the rotational speed and position of the rotary head in accordance with a desired speed and position as determined by a selected reference. As discussed hereinbefore, this is done during normal reproduce operations and edit record operations. Also, most recently, the vertically sync signal extracted from the reproduced video information has been employed to generate a synthetic control track signal, even when the tape on which the control track signal is recorded is stopped, i.e., at zero tape velocity.

As will become apparent upon consideration of the following description of the generation and use of the artificial vertical sync signal, use of that signal as a synthetic control track signal during zero or normal record and/or reproduce tape transport velocities of operation enables the exercise of effective control over the transport of the tape when the control track signal is unavailable (as when the tape is transported at zero tape velocity), is missing or is improperly recorded. By using the artificial vertical sync signal to generate the synthetic control track signal a more accurate representation of the actual vertical sync timing is obtained by virtue of it being obtained from a signal related in time to the actual vertical sync signal that is reproduced from the tape at a location along the tape path much closer to the location of the control track head. As discussed briefly hereinbefore, the rotational stability of the rotary head or heads, hence, the stability of recording information on and reproducing information from the tape depends upon the ability of the rotary head servo system and tape transport servo system commonly included in rotary head tape recording and reproducing apparatus to keep the rotary head or heads accurately positioned relative to the tape.

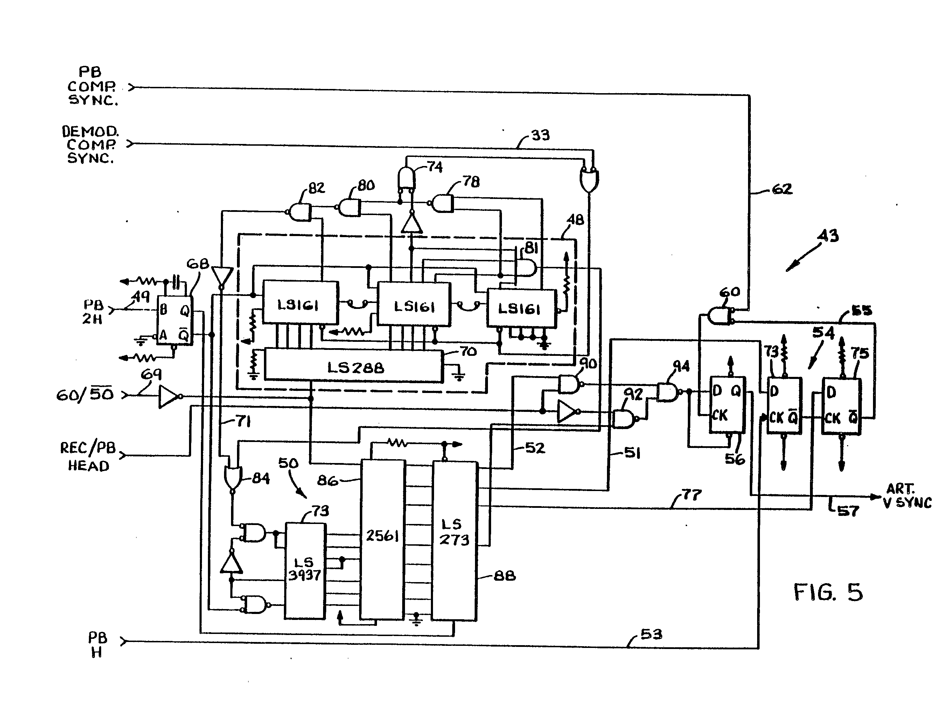

Referring now to Fig. 4, a preferred embodiment of the rotary head servo 200 is illustrated as arranged to utilize the artificial vertical sync signal provided by the artificial vertical sync generator circuitry illustrated in Fig. 3, which will be described in detail hereinbelow with reference to Figs. 3 and 5. Video information frequency modulated (FM) on a radio frequency (RF) carrier and recorded on the tape 12 (Fig. 1) is reproduced by the rotary head 22 as the tape is transported in a helical path around the tape guide drum 14. The reproduced FM video information is supplied to a typical video signal demodulator 201, which functions to remove the video information from the RF carrier. The demodulator 201 provides the demodulated video information signal on line 202, which extends to the input of a sync separator 204. Sync separator 204 functions to remove the composite sync information from the demodulated video signal present on line 202 and provide it over line 206 extending to the input of the artificial vertical sync generator 43. As generally described hereinbefore and will be described in further detail hereinafter with reference to Figs. 3 and 5, the generator 43 generates an artificial vertical sync timing related signal from the video composite sync information reproduced by the rotary head 22 when in transducing relation with the tape 12 (Fig. 1) near the exit guide 20 on the control track head 46 side of the tape guide drum 14. This reduces the amount of variation in the timing relationship between the reproduced control track signal and the artificially generated vertical sync signal since the length of tape separating the tape locations from which these signals are reproduced is substantially reduced.

The artificially generated vertical sync signal provided by the generator 43 is coupled by line 207 to the input of a phase comparator 208. The phase comparator 208 operates to compare the phase between the artificial vertical sync signal present on line 207 with the vertical rate reference signal supplied at a reference input 210. In the preferred embodiment, these signals are at the two interlaced field or frame rate, which is 30 Hz for a 60 Hz field rate television signal standard. However, it will be appreciated that signals could be generated at the television field rate as well. The vertical frame rate reference signal is typically supplied from an external source, generally termed "house sync" as is well known in the art. The amount of error detected by phase converter 208 represents the error in occurrence of the reproduced and artificially generated vertical sync signal relative to the occurrence of the vertical frame rate reference signal.

The rotary head 22 is rotated to scan the tape by a motor 216, which is also linked to an associated tachometer disc 280. Tachometer signals are provided at the rate of the rotation of the head 22, or 60 Hz for a 60 Hz field rate television signal standard, and are obtained from the tachometer 280 and supplied to an error detecting means 220. Error detection means 220 serves to compare the actual rotational position of the rotary head 22 with the desired position as indicated by a reference signal present on line 222 and responsively generate the desired error correction signal applied to a motor drive circuit 226 via line 224. The motor drive circuit 226 responsively supplies the necessary drive signal to the motor 216 to correct any detected rotational position or speed errors of the head 22. The reference signal present on line 222 is generated by a variable phase adjustment means 228, which serves to adjust the phase of vertical field rate reference signal (60 Hz for a 60 Hz field rate television signal standard) in accordance with any error in occurrence of the reproduced and artificially generated vertical sync signal relative to the occurrence of the vertical frame rate reference signal detected by the phase comparator 208. During normal reproduce operations the rotary servo system 200 functions as thusly described to maintain the rotary head 22 at the correct rotational speed and position. When the record and reproduce apparatus is placed in an edit mode of operation to record new video information synchronous with previous recorded information, the rotary head servo system 200 also functions in the foregoing manner during the reproduction of information previously recorded on the tape so that the rotary head 22 is positioned relative to the tape to record the new information synchronously with information previously recorded on the tape. When the correct rotary head position is obtained and the tape is positioned relative to the plane of the rotary head where the new information is to be recorded, the variable phase adjustment means 228, hence, the rotary head servo system 200, is locked to the last known correct rotational position of the rotary head 22, as determined by the output of the phase comparator 208, for the duration of the insert recording or edit operation to maintain such position for the duration of the operation. This may be achieved, for example, by opening switch 214 in the line 212 extending between the phase comparator 208 and the variable adjustment means 228 in response to the generation of a record edit command, which prevents further phase adjustment of the phase of the vertical rate reference signal in accordance with the output of the phase comparator 208.

The manner in which the artificial vertical sync signal is generated in accordance with the present invention can be better understood from Fig. 2(A) and 2(C). The vertical sync information is generally obtained from the tape before rotary head 22 (Fig. 1) enters the drop-out zone 30, which is to the left of the start 40 of the drop-out as seen in Fig. 2(C). The second pre-equalizing pulse 32 (Fig. 2(A)) is ordinarily reliably present and reproducible from the tape 12 regardless of the changes in conditions between the recording and reproducing of information from the tape 11. The location of the second pre-equalizing pulse 32 is physically present approximately at the location 11 shown in Fig. 1. The present invention utilizes the second pre-equalizing pulse 32 to start a counter which counts during the time that the drop-out is occurring and starts a timing window 31 when the rotary head 22 arrives at the opposite side of the drop-out zone 30, i.e., to the right of the point 42 shown in Fig. 2(C), and point 13 in Fig. 1, which window is sufficiently wide to permit detection of a predetermined horizontal sync pulse, for use in the generation of an artificial vertical sync signal for controlling the rotary head servo system 200 (Fig. 4). Because the location of the horizontal sync pulses are offset by 1/2 line from television field to television field, as is evident by comparing Fig. 2(A) which illustrates an even field and Fig. 2(B) which illustrates an odd field, the window 31 is only opened on even fields so as to detect a consistently reoccurring horizontal sync pulse.

It should be appreciated that the tape may still experience dimensional variations due to changes in the temperature, humidity and other conditions, but the variations will only affect the movement of the timing window 31 that is opened for detection of a particular horizontal sync pulse. As a result, the occurrence of that pulse relative to the reproduction of the control track signal will be such that variations in the relative timing of these signals are influenced by only approximately three inches (in recording and reproducing apparatus designed in accordance with the Type C Format standard) of separation between the location of the control track head 46 and the location of the rotary head 22 at the time of the reproduction of selected horizontal sync pulse, rather than a tape length of twenty inches that includes a length of tape around the tape guide drum 14, if the vertical sync signal was used instead.

The artificial vertical sync signal generator 43 is shown in the block diagram of Fig. 3. The generator 43 includes a relatively large capacity field counter 48 which is clocked by a continuous 2H rate clock signal impressed on line 49, i.e., two times the frequency of the horizontal sync of the television signal. The 2H rate clock signal is derived from the composite sync signal contained in the reproduced video information. The field counter 48 is adapted to be reset by a field rate signal on line 33, which is preferably the second pre-equalizing pulse of the video information signal derived from either the record head 22, if it is being used in its reproducing mode such as would occur immediately prior to an insert edit operation, or from the reproduce head 24 during other reproducing operations. During insert edit operations, it is highly desirable that rotational position of the head that is going to record the new information synchronously with the previously record information remains the same relative to the recorded control track signal after the insert edit recording is started. The record/reproduce head 22 is coupled to the artificial vertical sync generator 43 during the reproducing operation preceding the edit record operation to synchronize the rotational speed and position of the rotary head to the previously recorded information immediately prior to the start of the recording of the new video information. Thus, the field counter 48 preferably is reset by the second pre-equalizing pulse reproduced by the record/ reproduce head 22 from the previously recorded information until the start of the insert edit recording operation. Following the initiation of the insert edit recording operation, pre-equalizing pulses are no longer provided over line 33 to reset the field counter 48 and the counter cycles in accordance with the last received pre-equalizing pulse. As will become more apparent from the following description of Figs. 3 and 5, this results in synchronizing the artificial vertical sync signal to the phase of the previously recorded information for the duration of the insert edit operation.

The field counter 48 counts through a selected range and, upon reaching its terminal count, resets a vertical counter 50. The vertical counter is also clocked by the 2H clock signal on line 49. The vertical counter has an output line 52 which is at a high logic state signal level for two predetermined counts of the count interval of the vertical counter, or an interval corresponding to one horizontal line. The timing window signal 31 is formed by this 1H signal for detecting the selected horizontal sync pulse 44, as shown in Figs. 2(A) and 2(D).

A playback field detector 54 is provided which has an output line 55 that is at a logical high signal state and a low logical signal state on alternate fields of the reproduced video information signal. When the field counter 48 resets the vertical counter 50, the counter 50 issues a timing signal on its output line 51 extending to the playback field detector 54. If an odd television field follows this resetting a horizontal sync pulse reproduced by the record and reproduce head 22 is simultaneously received by the detector over input line 53 extending from the playback sync separator. If an even television field follows such resetting, a horizontal sync pulse will not be present at the time at issuance of the timing signal by the counter 50, because of the one-half horizontal line interval offset in horizontal sync on alternate television fields. Thus, a coincidence between the timing signal issued by the vertical counter 50 and a reproduced horizontal sync pulse occurs only every other reproduced television field. Upon such coincidence, the detector 54 places a high logic state signal on its output line 55, which lasts until the next resetting of the vertical counter 50. At that time, no coincidence occurs between the timing signal issued by the vertical counter 50 and a reproduced horizontal sync pulse. Hence, the output of the detector 54 is placed at a low logic state signal level, which last during the following television field interval. The timing of the resetting of the vertical counter 50 is selected so that the output of the detector 54 is high only during the odd fields of the reproduced television signal.

The output line 55 of the detector 54 extends to one input of an AND gate 60 which has another input connected to input line 62 to receive the reproduced H sync signal separated from the video information being reproduced. Thus, when the AND gate 60 is enabled during an odd numbered field, the occurrence of the H sync signal is passed through gate 60 to its output line 64 and clocks the flip-flop 56. Since the line 52 remains high for only two selected counts of the vertical counter 50, it defines the timing window signal 31 within which a horizontal sync may be selected. The horizontal sync pulse passing through gate 60 to line 64 during the interval of the 1H wide timing window signal 31 clocks the flip-flop 56 and its Q output on output line 57 goes to a high logic signal state, thereby defining the start of the artificial vertical sync signal. The width of the artificial vertical sync signal is terminated at the trailing edge of the timing window signal 31 provided on line 52, which is coupled to the clear input of the flip-flop 56.

The field counter 48 counts 2H clock pulses from one preset number to another preset number. The value of the preset number depends upon whether the apparatus is operating to record and/or reproduce television signals in the 525 line format system, or in the 625 line format system. The field counter 48 is preset by the second pre-equalizing pulse of each vertical blanking interval provided over line 33. In the 525 line format system, the field counter 48 is preset to a count of 148. The counter 48 counts 2H pulses starting at a time that corresponds with the pre-equalizing pulse 32 in Fig. 2(A) until a count of 672 is reached, which constitutes a count interval corresponding to an entire field of 2H pulses. At count 648, the counter 48 produces an output pulse which resets the vertical counter 50 to count 0. The counter 50 is also clocked by the 2H clock and counts from 0 to 63. At count 61 following the reset of the vertical counter 50, which corresponds to an interval of about 280 horizontal line intervals following the reset of the counter, hence, the 19th horizontal sync time of the second vertical blanking interval following such reset, the counter 50 generates the leading edge of the timing window signal 31 by causing its output 52 to a high logic state. On odd fields, the output of the field detector 54 is also high, which enables the AND gate 60. The horizontal synchronizing pulses reproduced from the tape by the head 22 and separated from the reproduced video information are coupled by line 62 to one input of the gate 60. When the gate 60 is enabled by the field detector 54, a horizontal pulse is provided to the clock input 64 of the flip-flop 56.

The horizontal sync pulse which occurs while the high logic state timing window signal 31 is present on line 52 clocks the flip-flop 56, and its Q output goes high as previously described. The flip-flop 56 is cleared by the vertical counter 50 when its output on line 52 goes to a low logic state at a count of 63. The counter 50 stops counting at 63 until it is again reset by the field counter 48. Thus, the vertical counter 50 provides a timing window signal 31 during count states 61 and 62, which corresponds to a full horizontal line interval corresponding to the second half of horizontal line 19 and the first half of horizontal line 20 in Fig. 2(B). As will be appreciated from Figs. 2B and 2D, this occurs after the head 22 passes through the drop-out zone 30 (Fig. 1) to the control track head side of the tape guide drum 14. The horizontal sync pulse which occurs in the window 31 defines the artificial vertical sync and is used to control the rotary head servo system 200, as previously described with reference to Fig. 4. If the relative timing between the reproduced video information and reproduced control track changes from that which existed during the recording of the video information, for example, as a result of a change in the static tape tension, timing errors will be introduced into the reproduced video information. However, the artificial vertical sync signal is reproduced from the helically transported tape 11 (Fig. 1) in accordance with the present invention at a time when the rotary head 22 is at the side the tape guide drum 14 closest to the control track head 46, which is about 3 inches along the tape path. Consequently, determination of the static timing errors is facilitated, because any dynamic timing error which would render the determination ambiguous are minimized at this time. Thus, the adverse effects of interchange, tracking geometry, tape tension and other like variations effecting the relative timing between the reproduced control track signal and video information signal are obviated. Moreover, the artificial vertical sync signal enables the generation of a synthetic control track signal that is closer to the actual timing of the recorded control track signal. Such synthetic control track signal is useful in the control of rotary head video tape recording and reproducing apparatus, particularly, where a control track related signal is required during the operation of the recording and reproducing apparatus when the transport of the tape is stopped.

As discussed hereinbefore, the timing window signal 31 may shift in time slightly as a result of variations between the control track signal and video information signal timing, in part because it is generated from information reproduced from the tape 12 at a point along the path of the tape which is about 20 inches from the location of the control track head 46. However, even if the timing window signal 31 shifts in time, the rotary head 22 will still be properly synchronized to the selected horizontal sync pulse used to form the artificial vertical sync signal.

While the artificial vertical sync signal could be generated through the use of only the vertical counter 50, the field counter 48 provides the capability of easily adapting the invention for use with either the 525 or 625 horizontal line formats. In the 525 line format, the field counter 48 counts 525 lines, from 148 to 672. In the 625 line formats, the field counter 48 counts 625 lines, from 48 to 672. In each case, the vertical counter 50 is reset to zero and starts counting by decoding a field counter 48 output of 648.

Fig. 5 is a detailed schematic drawing of the circuitry of a preferred embodiment of the artificial vertical sync signal generator 43 of this invention. Horizontal sync signals included in the video information reproduced from the tape by head 22 and separated therefrom by a common sync signal separator are coupled to the input line 62 extending to the gate 60. The 2H clock signal is derived from the horizontal sync signal included in the reproduced video information, multiplied in conventional fashion and supplied by circuitry (not shown) over the line 49 extending to the input of a monostable multivibrator, or one-shot 68. The one-shot 68 serves to retime the 2H clock signal for clocking the field counter 48 and the vertical counter 50 at the desired 2H rate.

The field counter 48 is preset to a predetermined number by a PROM 70 determined by the horizontal line format standard signal provided on the control line 69 in accordance with the line format standard which the recording and reproducing apparatus is conditioned to record and/or reproduce. The field counter 48 is preset to its preset number of 148 (for the 525 line format) or 48 (for the 625 line format) by the horizontal line format standard signal provided on the control line 69. This signal addresses the PROM to provide the appropriate preset number to the field counter 48.

Decoding gates 78, 80, 81 and 82 detect an output provided by the field counter 48 corresponding to a count of 648. The output of the gate 82 is inverted, and connected to an input line 71 extending to one input of a NOR gate 84, which causes the vertical counter 50 to be reset to zero upon the occurrence of a 648 count state at the output of field counter 48. The counter 73 part of the vertical counter 50 provides an output corresponding to counts of 61 and 62, which are decoded by a vertical PROM 86 to provide corresponding outputs to a buffer 88.

Selected output lines of the buffer 88 are applied to following logic circuitry, including gates 90, 92 and 94, and the output of the gate 94 is at a high logic state signal while the vertical counter 50 is in count states 61 and 62. This high logic state signal is applied to the D input of the flip-flop 56. If a sync pulse appears on line 62 during the 1H high logic state signal interval, the flip-flop 56 will be clocked to provide a high logic state on its Q output line 57, which is the artificial vertical sync signal as previously discussed.

The even and odd fields are identified by the field detector 54 as previously described, which is defined by a pair of flip-flops 73 and 75. The first flip-flop 73 receives the reproduced H sync pulses over line 53, and if one occurs during the interval that the vertical counter 50 is in its reset condition, the flip-flop 73 clocks the following flip-flop 75. At this clock time, on output line 77 extending from the buffer 88 to the D input of the flip-flop 75 is at a logic state that results in a high logic level signal being placed on the output line 55 extending to the gate 60. As described hereinbefore, gate 60 is enabled by this signal condition on line 55 to pass the horizontal sync pulse that results in the generation of the artificial vertical sync signal by the flip-flop 56. If a horizontal sync pulse does not occur on line 53 while the vertical counter 50 is in its reset condition, the flip-flop 75 provides a low logic level signal on output line 55 that disables the gate 60. As discussed previously with reference to Fig. 3, gate 60 is enabled by the playback field detector 54 when odd television fields are reproduced following a reset of the vertical counter 50 and disabled when alternate even television fields are reproduced following such reset.

As described hereinbefore, the field counter 48 is arranged to self preset when it reaches its terminal count. This is performed by the gate 74 that decodes the output of the field counter 48.

From the foregoing, it should be appreciated that an improved method and apparatus for minimizing the adverse effects timing errors that can occur as a result of variations in the relationship between recorded vertical sync and control track signals has been described. The present invention produces an artificial vertical sync signal that is derived from a selected part of video information signals that are reproduced from the tape at a location in the tape path which is physically much closer to the location of the control track head than the tape location of the conventionally used vertical sync signal. The artificial vertical sync signal is advantageously used to control the rotary head servo in a manner to achieve improved synchronization of the rotational speed and position of the rotary head.

It should be understood that although preferred embodiments of the present invention have been illustrated and described, various modifications thereof will become apparent to those skilled in the art; and, accordingly, the scope of the present invention should be defined only by the appended claims.

Various features of the invention are set forth in the following claims.

**Claims**

1. A method of generating a selected, vertical blanking interval related, signal for controlling a rotatable head servo in a helical wrap magnetic video tape recording and reproducing machine which has a control track head (46) located adjacent one (20) of two spaced apart tape guides (10, 20) for directing a magnetic tape (12) into and out of a helical path about a tape guide drum (14) that guides the tape as the rotatable head (22) reproduces video information recorded on the tape and wherein the vertical blanking interval signals included in the video information recorded on the tape are reproduced therefrom by the rotatable head at a location adjacent the other (18) of the tape guides, the method being characterised by detecting a selected component of the recorded vertical blanking interval at a location (11) in the helical path adjacent said other tape guide; detecting a recorded predetermined horizontal synchronizing pulse (44) at or near a predetermined time after the detection of the selected component of the vertical blanking interval and at a location (13) in the helical path adjacent said one tape guide; and generating the said selected signal in response to said detection of the predetermined horizontal synchronizing pulse.

2. A method according to claim 1 wherein said predetermined horizontal synchronizing pulse is detected on alternate fields.

3. A method according to claim 1 or claim 2 wherein the step of generating the said selected signal comprises generating a timing window signal (31) in response to and at a predetermined time following the detection of the selected component of the vertical blanking interval, and issuing the said selected signal in response to the coincidence of the predetermined horizontal synchronizing pulse and the said timing window signal.

4. A method according to claim 3 wherein the generation of said timing window signal comprises counting a horizontal synchronizing pulse related clock signal in response to the detection of the vertical blanking interval component, and generating said timing window signal in response to counting a predetermined count.

5. A servo system for controlling the rotation of a rotating head (22) as it reproduces an information signal recorded on a tape helically transported along a path about a rotating head, the recorded information signal including periodic sync intervals and periodic sync timing signals, comprising: means (208) for comparing a signal related to the rotation of the head with a reference signal indicative of the desired rotation of the rotating head to generate an error signal; and means (228, 220, 226) for altering the rotation of the rotating head in response to the error signal; characterised by means for detecting a component of a sync interval at a location (11) on the tape path other than said selected location; and means for detecting the selected sync timing signal at said selected location (13) and within a selected time interval occurring at a predetermined time after detection of said component of the sync interval to provide the time related signal.

6. A servo system according to claim 5 wherein the rotating head is operatively linked to a tachometer means (280) that provides a tachometric signal in a known time relation to the rotation of the head, and the means for altering the rotation of the rotating head is responsive to a comparison of the time relation between the error signal and the tachometric signal.

7. A servo system according to claim 5 or claim 6 wherein the information signal is a television signal, the periodic sync interval is a periodic vertical sync interval and the periodic sync timing signal is a periodic horizontal sync pulse.

8. Apparatus for generating a selected, vertical blanking interval related, signal for controlling a rotatable head servo (Fig. 4) in a helical wrap magnetic video tape recording and reproducing machine which has a control track head (46) located adjacent one (20) of two spaced apart tape guides (18, 20) that directs a magnetic tape (12) into and out of a helical path about a tape guide drum (14) which guides the tape as the rotatable head (22) reproduces video information recorded on the tape and wherein the vertical blanking interval signals included in the video information recorded on the tape and reproduced therefrom by the rotatable head at a location adjacent the other of the tape guides, the apparatus being characterised by means (22, 23) for detecting a selected component of the recorded vertical blanking interval at a location (11) in the helical path adjacent said other tape guide; means (54, 60) for detecting a recorded predetermined horizontal synchronizing pulse that occurs a predetermined time after the detection of the vertical blanking interval component and at a location in the helical path adjacent said one tape guide; and means (56, 57) for generating the selected vertical blanking interval component related signal in response to the detection of the predetermined horizontal synchronizing pulse.

9. Apparatus according to claim 8 wherein said predetermined horizontal synchronizing pulse is detected on alternate fields of the recorded video information.

10. Apparatus according to claim 9 wherein said means for detecting a recorded predetermined horizontal synchronizing pulse comprises a field detector means (54) for identifying a selected field of a repeated sequence of fields forming said recorded video information, and means (60) responsive to said field detector means to couple said predetermined horizontal synchronizing pulse to the means (56) for generating the vertical blanking component related signal in response to the identification of said selected field.

11. Apparatus according to any of claims 8 to 10 further comprising means (33, 48, 49, 50) for providing a timing window signal at a predetermined time subsequent to and in response to the detection of the vertical blanking interval component, said means (56) for generating the selected signal being responsive to a coincidence of the timing window signal and the predetermined horizontal synchronizing pulse to issue the selected signal.

12. Apparatus according to claim 11 wherein said means for providing said timing window signal comprises a counting means (48, 50) which is set to count clock signals in response to the detection of the selected vertical blanking interval component, and is clocked to count in response to a clock signal related to the horizontal synchronizing pulses, said timing window signal being provided in response to a predetermined count by said counting means.

13. Apparatus according to claim 12 wherein said counting means comprises a first counter and a second counter, said first counter (48) being set to count the clock signals in response to the detection of the selected vertical blanking interval component, said second counter (50) set to count the clock signals in response to the first counter counting a first predetermined number of clock signals and providing said timing window signal in response to a count of a second predetermined number of the clock signals.

14. Apparatus according to any of claims 8 to 13 wherein said vertical blanking interval component is reproduced from the tape by a rotatable transducing head (22) provided for recording information on the tape.

**Patentansprüche**

1. Verfahren zum Erzeugen eines ausgewählten, auf ein Vertikalaustastintervall bezogenen Signals zur Steuerung einer Servoanordnung für einen rotierenden Kopf in einem Video-Aufzeichnungs- und Wiedergabegerät mit schraubenförmiger Führung des Magnetbandes, das einen benachbart zu einer Bandführung (20) von zwei beabstandeten Bandführungen (18, 20) angeordneten Steuerspurkopf (46) zur Führung des Magnetbandes (12) in einen bzw. aus einem schraubenförmigen Weg um eine Bandführungstrommel (14) aufweist, welche das Band führt, wenn der rotierende Kopf (22) auf dem Band aufgezeichnete Videoinformation abspielt, wobei die in der Videoinformation auf dem Band enthaltenen Vertikalaustastintervall-Signale durch den rotierenden Kopf an einer Stelle wiedergegeben werden, welche im Bereich der anderen Bandführung (18) der beiden Bandführungen liegt, dadurch gekennzeichnet, daß eine ausgewählte Komponente des aufgezeichneten Vertikalaustastintervalls an einer im schraubenförmigen Bandweg benachbart zur anderen Bandführung liegenden Stelle (11) detektiert wird, ein aufgezeichneter vorgegebener horizontal Synchronimpuls (44) in einer bzw. im Bereich einer vorgegebenen Zeit nach der Detektierung der ausgewählten Komponente des Vertikalaustastintervalls und an einer im schraubenförmigen Weg benachbart zu der einen Bandführung befindlichen Stelle (13) detektiert wird und daß das ausgewählte Signal als Funktion der Detektierung des vorgegebenen Horizontalsynchronimpulses erzeugt wird.

2. Verfahren nach Anspruch 1, bei dem der vorgegebene Horizontalsynchronimpuls in abwechselnden Teilbildern detektiert wird.

3. Verfahren nach Anspruch 1 oder 2, bei dem im Schritt der Erzeugung des ausgewählten Signals als Funktion der Detekierung des ausgewählten Komponente des Vertikalaustastintervalls sowie in einer vorgegebenen Zeit danach ein Zeitfenstersignal (31) erzeugt und das ausgewählte Signal als Funktion der Koinzidenz des vorgegebenen Horizontalsynchronimpulses und des Zeitfenstersignals geliefert wird.

4. Verfahren nach Anspruch 3, bei dem die Erzeugung des Zeitfenstersignals die Zählung eines auf ein Taktsignal bezogenen Horizontalsynchronimpulses als Funktion der Detektierung der Vertikalaustastintervall-Komponente umfaßt und das Zeitfenstersignal als Funktion der Zählung eines vorgegebenen Zählwertes erzeugt wird.

5. Servosystem zur Steuerung der Rotation eines rotierenden Kopfes (22) bei Wiedergabe eines auf einem Band aufgezeichneten Informationssignals, wobei das Band schraubenförmig längs eines Weges um einen rotierenden Kopf geführt wird und das aufgezeichnete Informationssignal periodische Synchronintervalle und periodische Synchron-Zeittaktsignale enthält, mit einer Anordnung (208) zum Vergleich eines auf die Rotation des Kopfes bezogenen Signals mit einem ein Maß für die gewünschte Rotation des rotierenden Kopfes darstellenden Referenzsignal zur Erzeugung eines Fehlersignals und mit einer Anordnung (228, 220, 226) zur Änderung der Rotation des rotierenden Kopfes als Funktion des Fehlersignals, gekennzeichnet durch eine Anordnung zur Detektierung einer Komponente eines Synchronintervalls an einer sich von der vorgegebenen Stelle unterscheidenden Stelle (11) auf dem Band und durch eine Anordnung zur Detektierung des ausgewählten Synchron-Zeittaktsignals an der ausgewählten Stelle (13) und innerhalb eines ausgewählten Zeitintervalls, das eine vorgegebene Zeit nach der Detektierung der Komponente des Synchronintervalls auftritt, zwecks Erzeugung des zeitbezogenen Signals.

6. Servosystem nach Anspruch 5, bei dem der rotierende Kopf mit einer Tachometeranordnung (280) in Wirkverbindung steht, welche ein Tachometersignal in bekanntem Zeitzusammenhang mit der Rotation des Kopfes erzeugt, und bei dem eine Anordnung zur Änderung der Rotation des rotierenden Kopfes als Funktion eines Vergleiches des Zeitzusammenhangs zwischen dem Fehlersignal und dem Tachometersignal vorgesehen ist.

7. Servosystem nach Anspruch 5 oder 6, bei dem das Informationssignal ein Fernsehsignal, das periodische Synchronintervall ein periodisches Vertikalsynchronintervall und das periodische Synchron-Zeittaktsignal ein periodischer Horizontalsynchronimpuls ist.

8. Vorrichtung zur Erzeugung eines ausgewählten, auf ein Vertikalaustastintervall bezogenen Signals zur Steuerung einer Servoanordnung (Fig. 4) für einen rotierenden Kopf in einem Video-Aufzeichnungs- und Wiedergabegerät mit schraubenförmiger Führung des Magnetbandes, das einen benachbart zu einer Bandführung (20) von zwei beabstandeten Bandführungen (18, 20) angeordneten Steuerspurkopf (46) zur Führung des Magnetbandes (12) in einen bzw. aus einem schraubenförmigen Weg um eine Bandführungstrommel (14) aufweist, welche das Band führt, wenn der rotierende Kopf (22) auf dem Band aufgezeichnete Videoinformation abspielt, wobei die in der Videoinformation auf dem Band enthaltenen Vertikalaustastintervall-Signale durch den rotierenden Kopf an einer Stelle wiedergegeben werden, welche im Bereich der anderen Bandführung (18) der beiden Bandführungen liegt, gekennzeichnet durch eine Anordnung (22, 23) zur Detektierung einer ausgewählten Komponente des Vertikalaustastintervalls an einer der anderen Bandführung benachbarten Stelle (11) im schraubenförmigen Weg, eine Anordnung (54, 60) zur Detektierung eines aufgezeichneten vorgegebenen Horizontalsynchronimpulses, der eine vorgegebene Zeit nach der Detektierung der Vertikalaustastintervall-Komponente und an einer der einen Bandführung benachbarten Stelle im schraubenförmigen Weg auftritt, und durch eine Anordnung (56, 57) zur Erzeugung des ausgewählten, auf die Vertikalaustastintervall-Komponente bezogenen Signals als Funktion der Detektierung des vorgegebenen Horizontalsynchronimpulses.

9. Vorrichtung nach Anspruch 8, bei welcher der vorgegebene Horizontalsynchronimpuls in abwechselnden Teilbildern der aufgezeichneten Videoinformation detektiert wird.

10. Vorrichtung nach Anspruch 9, bei welcher die Anordnung zur Detektierung eines aufgezeichneten vorgegebenen Horizontalsynchronimpulses einen Teilbilddetektor (54) zur Identifizierung eines ausgewählten Teilbildes einer wiederholten Folge von die aufgezeichnete Videoinformation bildenden Teilbildern und eine vom Teilbilddetektor angesteuerte Stufe (60) umfaßt, welche den vorgegebenen Horizontalsynchronimpuls als Funktion der Identifizierung des ausgewählten Teilbildes an die Anordnung (56) zur Erzeugung des auf die Vertikalaustastkomponente bezogenen Signals ankoppelt.

11. Vorrichtung nach den Ansprüchen 8 bis 10, bei welcher eine Anordnung (33, 48, 49, 50) zur Erzeugung eines Zeitfenstersignals in einer vorgegebenen Zeit nach der Detektierung der Vertikalaustastintervall-Komponente sowie als Funktion dieser Detektierung vorgesehen ist, und bei welcher die Anordnung (56) zur Erzeugung des ausgewählten Signals auf eine Koinzidenz des Zeitfenstersignals und des vorgegebenen Horizontalsynchronimpulses zwecks Ausgabe des ausgewählten Signal anspricht.

12. Vorrichtung nach Anspruch 11, bei der die Anordnung zur Erzeugung des Zeitfenstersignals eine Zähleranordnung (48, 50) umfaßt, welche zur Zählung von Taktsignalen als Funktion der Detektierung der ausgewählten Vertikalaustastintervall-Komponente gesetzt wird und zur Zählung als Funktion eines auf die Horizontalsynchronimpulse bezogenen Taktsignals getaktet wird, wobei das Zeitfenstersignal als Funktion eines vorgegebenen Zählwerts in der Zähleranordnung geliefert wird.

13. Vorrichtung nach Anspruch 12, bei welcher die Zähleranordnung einen ersten und einen zweiten Zähler umfaßt, der erste Zähler (48) zur Zählung der Taktsignale als Funktion der Detektierung der ausgewählten Vertikalaustastintervall-Komponente gesetzt wird und der zweite Zähler (50) zur Zählung der Taktsignale als Funktion der Zählung einer ersten vorgegebenen Anzahl von Taktsignalen gesetzt wird und das Zeitfenstersignal als Funktion einer Zählung einer zweiten vorgegebenen Anzahl von Taktsignalen liefert.

EP 0 119 199 B1

14. Vorrichtung nach den Ansprüchen 8 bis 13, bei welcher die Vertikalaustastintervall-Komponente durch einen rotierenden Wandlerkopf (22) vom Band wiedergegeben wird, welcher zur Aufzeichnung von Information auf dem Band vorgesehen ist.

## Revendications

1. Procédé de production d'un signal sélectionné associé à l'intervalle de suppression de trame destiné à commander un asservissement de tête rotative d'une machine d'enregistrement et de reproduction vidéo sur bande magnétique à enroulement hélicoïdal qui comporte une tête de piste de pilotage (46) située au voisinage de l'un (20) de deux guides-bande (18, 20) espacés l'un de l'autre et destinés à guider une bande magnétique (12) dans et hors d'un trajet hélicoïdal autour d'un tambour guide-bande (14) qui guide la bande lorsque la tête rotative (22) reproduit les informations vidéo enregistrées sur la bande et dans lequel les signaux d'intervalle de suppression de trame compris dans les informations vidéo enregistrées sur la bande sont reproduits à partir de celle-ci par la tête rotative en un emplacement adjacent au second (18) des guides-bande, le procédé étant caractérisé par la détection d'une composante sélectionnée de l'intervalle de suppression de trame enregistré en un emplacement (11) du trajet hélicoïdal adjacent audit second guide-bande, la détection d'une impulsion de synchronisation horizontale enregistrée prédéterminée (44) à un moment, ou aux environs d'un moment, prédéterminé après la détection de la composante sélectionnée de l'intervalle de suppression de trame et en un emplacement (13) du trajet hélicoïdal adjacent audit premier guide-bande; et la production dudit signal sélectionné en réponse à ladite détection de l'impulsion de synchronisation horizontale prédéterminée.

2. Procédé selon la revendication 1, dans lequel ladite impulsion de synchronisation horizontale prédéterminée est détectée toutes les deux trames.

3. Procédé selon la revendication 1 ou la revendication 2, dans lequel l'étape de production dudit signal sélectionné comprend la production d'un signal de fenêtre de synchronisation (31) en réponse à, et à un moment prédéterminé après, la détection de la composante sélectionnée de l'intervalle de suppression de trame, et l'émission dudit signal sélectionné en réponse à la coïncidence entre l'impulsion de synchronisation horizontale prédéterminée et ledit signal de fenêtre de synchronisation.

4. Procédé selon la revendication 3, dans lequel la production dudit signal de fenêtre de synchronisation comprend le comptage d'un signal d'horloge associé à l'impulsion de synchronisation horizontale en réponse à la détection de la composante de l'intervalle de suppression de trame, et la production dudit signal de fenêtre de synchronisation en réponse au comptage d'un compte prédéterminé.

5. Asservissement destiné à commander la rotation d'une tête rotative (22) lorsqu'elle reproduit un signal d'informations enregistré sur une bande entraînée hélicoïdalement le long d'un trajet autour d'une tête rotative, le signal d'informations enregistré comprenant des intervalles de synchronisation périodiques et des signaux de synchronisation de signaux de synchronisation périodiques, comprenant: des moyens (208) pour comparer un signal associé à la rotation de la tête à un signal de référence représentatif de la rotation désirée de la tête rotative afin d'engendrer un signal d'erreur; et des moyens (228, 220, 226) pour modifier la rotation de la tête rotative en réponse au signal d'erreur; caractérisé par des moyens pour détecter une composante d'un intervalle de synchronisation en un emplacement (11) sur le trajet de la bande autre que ledit emplacement sélectionné; et des moyens pour détecter le signal de synchronisation du signal de synchronisation sélectionné audit emplacement sélectionné (13) et à l'intérieur d'un intervalle de temps sélectionné se produisant à un moment prédéterminé après la détection de ladite composante de l'intervalle du signal de synchronisation afin de produire le signal associé dans le temps.

6. Asservissement selon la revendication 5, dans lequel la tête rotative est reliée opérationnellement à des moyens tachymétriques (280) qui fournissent un signal tachymétrique suivant un rapport temporel connu avec la rotation de la tête, et les moyens destinés à modifier la rotation de la tête rotative réagissent à une comparaison du rapport temporel entre le signal d'erreur et le signal tachymétrique.

7. Asservissement selon la revendication 5 ou la revendication 6, dans lequel le signal d'informations est un signal de télévision, l'intervalle de synchronisation périodique est un intervalle périodique de synchro verticale et le signal périodique de rythme de synchro est une impulsion périodique de synchro horizontale.

8. Appareil pour produire un signal sélectionné associé à l'intervalle de suppression de trame pour commander un asservissement de tête rotative (Figure 4) dans une machine d'enregistrement et de reproduction vidéo sur bande magnétique à enroulement hélicoïdal, qui comporte une tête de piste de pilotage (46) située au voisinage de l'un (20) de deux guides-bande (18, 20) espacés l'un de l'autre et qui guident une bande magnétique (12) dans et hors d'un trajet hélicoïdal autour d'un tambour guide-bande (14) qui guide la bande lorsque la tête rotative (22) reproduit des informations vidéo enregistrées sur la bande et dans lequel les signaux d'intervalle de suppression de trame compris dans les informations vidéo enregistrées sur la bande sont reproduits à partir de celle-ci par la tête rotative en un emplacement adjacent au second des guides-bande, l'appareil étant caractérisé par des moyens (22, 23) destinés à détecter une composante sélectionnée de l'intervalle de suppression de trame enregistré en un emplacement (11) du trajet hélicoïdal adjacent audit autre guide-bande; des moyens (54, 60) destinés à détecter une impulsion de synchronisation horizontale prédéterminée enregistrée qui se produit à un moment prédéterminé après la détection de la composante de l'intervalle de suppression de trame et en un emplacement du trajet hélicoïdal adjacent audit premier guidebande; et des moyens (56, 57) pour produire le signal associé à la composante de l'intervalle de suppression de trame sélectionnée en réponse à la détection de l'impulsion de synchronisation horizontale prédéterminée.

9. Appareil selon la revendication 8 dans lequel ladite impulsion de synchronisation horizontale prédéterminée est détectée toutes les deux trames des informations vidéo enregistrées.

10. Appareil selon la revendication 9 dans lequel lesdits moyens pour détecter une impulsion de synchronisation horizontale prédéterminée enregistrée comprennent des moyens de détection de trame (54) pour identifier une trame sélectionnée d'une séquence répétée de trames constituant lesdites informations vidéo enregistrées, et des moyens (60) réagissant auxdits moyens de détection de trames pour coupler ladite impulsion de synchronisation horizontale prédéterminée aux moyens (56) destinés à produire le signal associé à la composante de suppression de trame en réponse à l'identification de ladite trame sélectionnée.

11. Appareil selon l'une quelconque des revendications 8 à 10, comprenant en outre des moyens (33, 48, 49, 50) pour fournir un signal de fenêtre de synchronisation à un moment prédéterminé ultérieur à et en réponse à la détection de la composante de l'intervalle de suppression de trame, lesdits moyens (56) pour produire le signal sélectionné réagissant à une coïncidence entre le signal de fenêtre de synchronisation et l'impulsion de synchronisation horizontale prédéterminée pour émettre le signal sélectionné.

12. Appareil selon la revendication 11 dans lequel lesdits moyens destinés à fournir ledit signal de fenêtre de synchronisation comprennent des moyens de comptage (48, 50) qui sont réglés en vue de compter des signaux d'horloge en réponse à la détection de la composante de l'intervalle de suppression de trame sélectionnée, et qui reçoivent des impulsions d'horloge pour compter en réponse à un signal d'horloge associé aux impulsions de synchronisation horizontale, ledit signal de fenêtre de synchronisation étant fourni en réponse à un compte prédéterminé effectué par lesdits moyens de comptage.

13. Appareil selon la revendication 12 dans lequel lesdits moyens de comptage comprennent un premier compteur et un second compteur, ledit premier compteur (48) étant réglé pour compter les signaux d'horloge en réponse à la détection de la composante de l'intervalle de suppression de trame sélectionnée, ledit second compteur (50) étant réglé pour compter les signaux d'horloge en réponse au comptage par le premier compteur d'un premier nombre prédéterminé de signaux d'horloge et fournissant ledit signal de fenêtre de synchronisation en réponse à un compte d'un second nombre prédéterminé des signaux d'horloge.

14. Appareil selon l'une quelconque des revendications 8 à 13 dans lequel ladite composante de l'intervalle de suppression de trame est reproduite à partir de la bande par une tête de transduction rotative (22) prévue pour enregistrer des informations sur la bande.

FIG. 1

FIG. 3

CT HEAD

LINE # GATE

SERVO SYNC

PB SYNC

VERT COUNTER CLOCK RESET

P/B FIELD DETECT

PB COMP SYNC

PRESET FIELD COUNT CLK

2H CLOCK

PB H SYNC

P/B HEAD SWITCH TIMING

FIG. 2

EP 0 119 199 B1

60 Hz REFERENCE VERTICAL

VARIABLE PHASE ADJUSTMENT 228

ERROR DETECTION 220

MOTOR DRIVE 226

216

280

222

224

200

214

RECORD EDIT COMMAND

14

SCANNER

22

212

PHASE COMPARATOR 208

207

ARTIFICIAL VERT. SYNC. GENERATOR 43

206

SYNC SEPARATOR 204

202

VIDEO DEMODULATOR 201

210

30 Hz VERTICAL FRAME REFERENCE

FIG 4

FIG. 5